# EUROPÄISCHE PATENTANMELDUNG

(11) **EP 0 538 674 A1**
(43) Veröffentlichungstag der Anmeldung: **28.04.1993**
(21) Anmeldenummer: 92117103.9
(22) Anmeldetag: 07.10.1992
(51) Int. Cl.: B65G 17/06, B65G 21/02, B65G 21/06, B65G 15/12

(54) **Mehrspuriges Transportband**

(30) Priorität: 19.10.1991 DE 4134629
(71) Anmelder: Rexing, Günter, D-45307 Essen (DE)
(72) Erfinder: Rexing, Günter, D-45307 Essen (DE)
(74) Vertreter: Spalthoff, Adolf, Dipl.-Ing.

(57) **Zusammenfassung**

Ein mehrspuriges Transportband hat Scharnierbandketten (12), deren Oberseiten Stellflächen für zu transportierende Güter sind, Kunststoffprofile (11), die jeweils zwischen zwei Scharnierbandketten (12) angeordnet sind und auf denen jeweils zwei Scharnierbandketten (12) mit Randabschnitten ihrer Unterseiten aufliegen und geführt werden, Vierkantrohre (9), die in Längsrichtung des Transportbandes angeordnet sind und auf denen jeweils ein Kunststoffprofil (11) angebracht ist, und Querträger (1), die quer zur Förderrichtung des Transportbandes am Rahmen (3) desselben angebracht sind und auf denen die Vierkantrohre (9) gelagert sind.

Zur Vereinfachung des Montageaufwands und zur genauen Ausrichtung zwischen den Vierkantrohren (9) und den Querträgern (1) sind die Vierkantrohre (9) mittels einer Klemmverbindung an den Querträgern (1) befestigt.

## Beschreibung

Die Erfindung bezieht sich auf ein mehrspuriges Transportband mit Scharnierbandketten, deren Oberseiten Stellflächen für zu transportierende Güter sind, Kunststoffprofilen, die jeweils zwischen zwei Scharnierbandketten angeordnet sind und auf denen jeweils zwei Scharnierbandketten mit Randabschnitten ihrer Unterseiten aufliegen und geführt werden, Vierkantrohren, die in Längsrichtung des Transportbands angeordnet sind und auf denen jeweils ein Kunststoffprofil angebracht ist, und Querträgern, die quer zur Förderrichtung des Transportbands am Rahmen desselben angebracht sind und auf denen die Vierkantrohre gelagert sind.

Die Querträger sind erforderlich, um sicherzustellen, daß die von den Oberseiten der nebeneinander angeordneten Scharnierbandketten ausgebildete Stellfläche des mehrspurigen Transportbands quer zur Förderrichtung weitestgehend plan ist, so daß zu transportierende Güter in Querrichtung des Transportbands auf diesem bewegbar sind, ohne daß sie beim Übergang von einer Spur auf die benachbarte Spur bzw. von einer Scharnierbandkette auf die benachbarte Scharnierbandkette Gefahr laufen, umzufallen. Zur Befestigung der Vierkantrohre an den Querträgern werden bisher Schraub- und/oder Schweißverbindungen verwendet.

Aufgrund der verhältnismäßig aufwendigen Schweiß- und/oder Schraubverbindung zwischen Vierkantrohren und Querträgern ergeben sich bei der Montage mehrspuriger Transportbänder zeitaufwendige Arbeitsvorgänge, die zudem mit höchster Genauigkeit durchgeführt werden müssen, um den mit den Querträgern beabsichtigten Effekt, nämlich die planare Ausrichtung der Stellflächen in Querrichtung des Transportbands, zu erreichen.

Der Erfindung liegt die Aufgabe zugrunde, das gattungsgemäße mehrspurige Transportband derart weiterzubilden, daß der Montageaufwand bei der Aufstellung bzw. beim Aufbau eines mehrspurigen Transportbands verringert und die exakte räumliche Zuordnung zwischen Querträgern und Vierkantrohren besser gewährleistet ist.

Diese Aufgabe wird erfindungsgemäß dadurch gelöst, daß die Vierkantrohre mittels einer Klemmverbindung an den Querträgern befestigt sind. Hierdurch sind irgendwelche konstruktiven Maßnahmen statt sowohl am Vierkantrohr als auch am Querträger nur noch am Vierkantrohr oder am Querträger erforderlich. Das Zusammenfügen von Querträger und Vierkantrohr wird wesentlich vereinfacht.

Sofern die Querträger als Hohlprofile ausgebildet sind und an ihrer den Vierkantrohren zugewandten Oberseite Ausnehmungen aufweisen, in denen die Vierkantrohre einklemmbar sind, erfolgt das Zusammenfügen in einfacher Weise dadurch, daß das Vierkantrohr in die im Hohlprofil ausgebildete Ausnehmung eingedrückt wird, wobei die Klemmwirkung zwischen der Ausnehmung und dem Vierkantrohr durch eine entsprechende Maßvorgabe für die Ausnehmung in einfacher Weise erzielbar ist.

Hinsichtlich der erforderlichen mechanischen Eigenschaften der Querträger sowie zur Ausbildung der Ausnehmungen haben sich nach unten geöffnete U-Profile als besonders vorteilhaft erwiesen.

Die zur festen Verbindung zwischen Querträger und Vierkantrohr erforderliche Klemmwirkung läßt sich in einfacher Weise und zuverlässig erzielen, wenn die Ausnehmungen an einer Seite ihres Oberrands von einem Lappen begrenzt sind, wobei der Abstand zwischen dem freien Ende des Lappens und der diesem gegenüberliegenden oberen Seitenkante der Ausnehmung kleiner ist als die Breite des Vierkantrohres. Hierdurch ergibt sich beim Einsetzen des Vierkantrohres in die Ausnehmung eine Verformung der gegen das freie Ende des Lappens anliegenden Seitenfläche des Vierkantrohres, die zu einem besonders festen Klemmsitz des Vierkantrohres in der Ausnehmung führt.

Im folgenden wird die Erfindung an Hand einer Ausführungsform unter Bezugnahme auf die Zeichnung näher erläutert.

Es zeigen:
- Figur 1: eine perspektivische Darstellung einer Verbindung zwischen einem Querträger und einem Vierkantrohr;
- Figur 2: einen Teilschnitt durch ein mehrspuriges Transportband;
- Figur 3: eine Draufsicht auf die in Figur 1 dargestellte Verbindung; und
- Figur 4: eine Draufsicht auf einen Abschnitt eines zur Herstellung des Querträgers vorgesehenen Blechs.

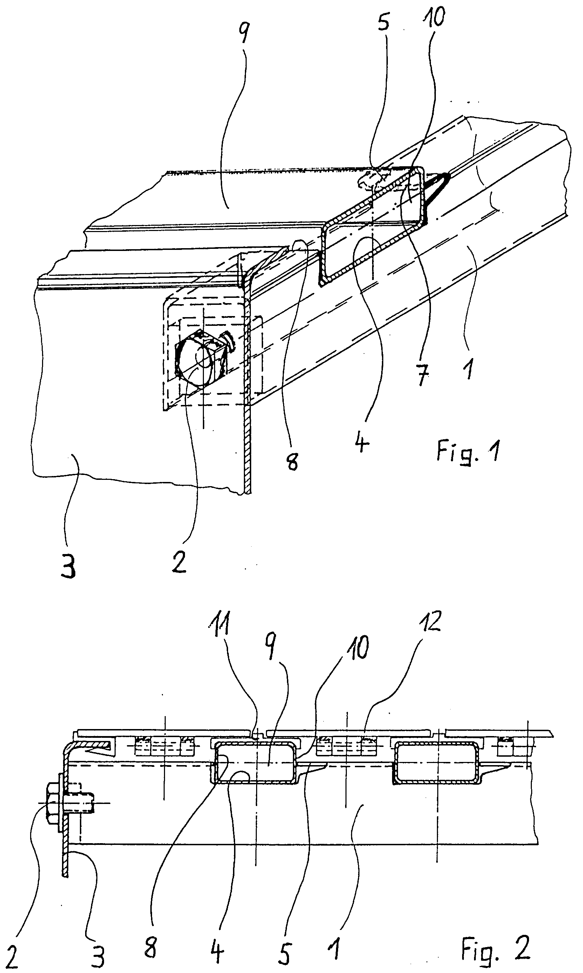

Ein in Figur 1 teilweise dargestellter Querträger 1 ist in Querrichtung zur Förderrichtung eines mehrspurigen Transportbands angeordnet und an seinen gegenüberliegenden Enden mittels einer Schraubverbindung 2 am in Figur 1 lediglich teilweise dargestellten Rahmen 3 des mehrspurigen Transportbands fest angebracht. Der Querträger 1 hat ein nach unten geöffnetes U-Profil als Querschnitt.

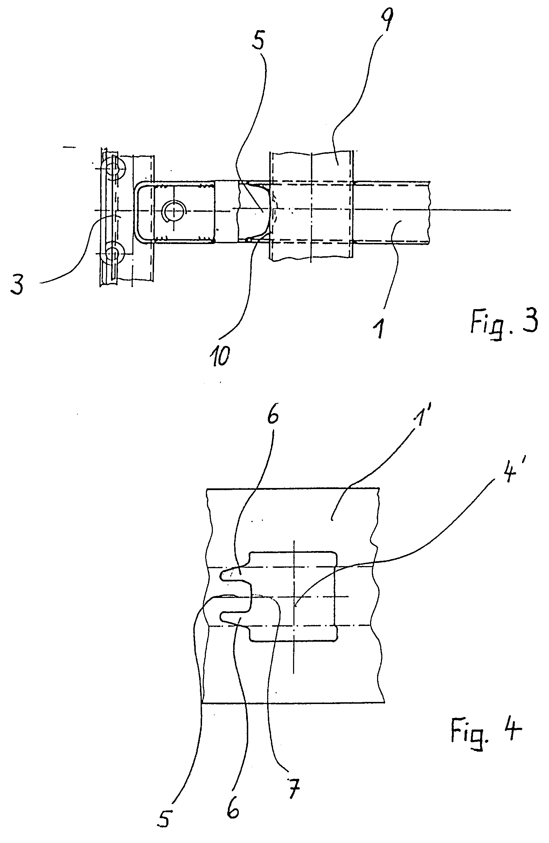

An der Oberseite des Querträgers 1 sind in regelmäßigen Abständen, die der Spurbreite des mehrspurigen Transportbands entsprechen, Ausnehmungen 4 ausgebildet. Die Ausnehmungen 4 werden dadurch erzeugt, daß in einem in Figur 4 dargestellten, zur Herstellung des Querträgers 1 vorgesehenen Blech 1' ein Loch 4' eingestanzt wird, aus dem bei der Profilgebung des Querträgers 1 die in Figur 1 dargestellte Ausnehmung 4 entsteht. Eine obere Seitenkante der Ausnehmung 4 wird durch einen Lappen 5 gebildet, der aufgrund von vorstehenden Einschnitten 6 des Lochs 4' entsteht. Der Abstand zwischen dem freien Ende 7 des Lappens 5 und der diesem gegenüberliegenden oberen Seitenkante 8 der Ausnehmung 4 ist etwas geringer als die Breite eines in die Ausnehmung 4 einzufügenden Vierkantrohres 9. Wenn das Vierkantrohr 9 in die Ausnehmung 4 eingesetzt wird, was unter leichter Druckausübung geschieht, wird aufgrund des Lappens 5 die an diesem anliegende Seitenfläche 10 des Vierkantrohres 9 leicht eingedrückt, wie es in Figur 3 angedeutet ist, so daß sich ein fester Klemmsitz des Vierkantrohres 9 in der im Querträger 1 ausgebildeten Ausnehmung 4 ergibt.

Auf den Oberseiten der Vierkantrohre 9 sind Kunststoffprofile 11 angebracht. Diese Kunststoffprofile 11 liegen mit ihrer Unterseite auf der Oberseite der Vierkantrohre 9 auf und weisen seitliche Vorsprünge auf, mit denen sie an den Seitenwänden der Vierkantrohre 9 nach unten vorstehen. Auf den Kunststoffprofilen sind Scharnierbandketten 12 des mehrspurigen Bandförderers mit ihren Unterseiten geführt und gelagert, wobei jeweils ein Kunststoffprofil 11 zwischen zwei benachbarten Scharnierbandketten 12 angeordnet ist, die jeweils mit ihrem entsprechenden Randbereich auf dem Kunststoffprofil 11 aufliegen.

## Patentansprüche

1. Mehrspuriges Transportband mit Scharnierbandketten (12), deren Oberseiten Stellflächen für zu transportierende Güter sind, Kunststoffprofilen (11), die jeweils zwischen zwei Scharnierbandketten (12) angeordnet sind und auf denen jeweils zwei Scharnierbandketten (12) mit Randabschnitten ihrer Unterseiten aufliegen und geführt werden, Vierkantrohren (9), die in Längsrichtung des Transportbandes angeordnet sind und auf denen jeweils ein Kunststoffprofil (11) angebracht ist, und Querträgern (1), die quer zur Förderrichtung des Transportbands am Rahmen (3) desselben angebracht sind und auf denen die Vierkantrohre (9) gelagert sind, dadurch gekennzeichnet, daß die Vierkantrohre (9) mittels einer Klemmverbindung an den Querträgern (1) befestigt sind.

2. Mehrspuriges Transportband nach Anspruch 1, bei dem die Querträger (1) als Hohlprofile ausgebildet sind und an ihrer den Vierkantrohren (9) zugewandten Oberseite Ausnehmungen (4) aufweisen, in denen die Vierkantrohre (9) einklemmbar sind.

3. Mehrspuriges Transportband nach Anspruch 2, bei dem die Querträger (1) als nach unten geöffnete U-Profile ausgebildet sind.

4. Mehrspuriges Transportband nach Anspruch 2 oder 3, bei dem die Ausnehmungen (4) an einer Seite ihres Oberrands von einem Lappen (5) begrenzt sind, wobei der Abstand zwischen dem freien Ende (7) des Lappens (5) und der diesem gegenüberliegenden oberen Seitenkante (8) der Ausnehmung (4) kleiner ist als die Breite des Vierkantrohres (9).
